# EUROPÄISCHE PATENTSCHRIFT

(11) **EP 2 380 005 B1**
(45) Veröffentlichungstag und Bekanntmachung des Hinweises auf die Patenterteilung: **27.01.2016**
(21) Anmeldenummer: 09796360.7
(22) Anmeldetag: 10.12.2009
(51) Int. Cl.: G01N 21/3504, G01J 3/02, G01J 3/42, G01N 21/27

(54) **VERFAHREN UND VORRICHTUNG ZUM MESSEN DER STOFFKONZENTRATION IN GASFÖRMIGEN ODER FLUIDEN MEDIEN ÜBER OPTISCHE SPEKTROSKOPIE MITTELS BREITBANDIGER LICHTQUELLEN**
METHOD AND DEVICE FOR MEASURING THE CONCENTRATION OF SUBSTANCES IN GASEOUS OR FLUID MEDIA THROUGH OPTICAL SPECTROSCOPY USING BROADBAND LIGHT SOURCES
PROCÉDÉ ET DISPOSITIF DE MESURE DE LA CONCENTRATION D'UNE SUBSTANCE DANS DES MILIEUX GAZEUX OU FLUIDES PAR SPECTROSCOPIE OPTIQUE À L'AIDE DE SOURCES LUMINEUSES À LARGE BANDE

(30) Priorität: 22.12.2008 DE 102008064173
(43) Veröffentlichungstag der Anmeldung: 26.10.2011
(60) Teilanmeldung: 15192390.1
(73) Patentinhaber: Bluepoint Medical GmbH & Co. KG, 23923 Selmsdorf (DE)
(72) Erfinder: DEGNER, Martin, 18236 Kröpelin (DE); EWALD, Hartmut, 18055 Rostock (DE); DAMASCHKE, Nils, 18211 Bargeshagen (DE); LEWIS, Elfred, Co Clare (IE)
(74) Vertreter: Kalhammer, Georg
(86) Internationale Anmeldenummer: PCT/EP2009/066840
(87) Internationale Veröffentlichungsnummer: WO 2010/072578

(56) Entgegenhaltungen:
- EP-A1- 0 656 535
- GB-A- 2 233 087
- US-A- 5 693 945
- ELFED LEWIS ET AL: "Monitoring of Environmentally Hazardous Exhaust Emissions from Cars Using Optical Fibre Sensors" 21. Juli 2008 (2008-07-21), EMBEDDED COMPUTER SYSTEMS: ARCHITECTURES, MODELING, AND SIMULATION; [LECTURE NOTES IN COMPUTER SCIENCE], SPRINGER BERLIN HEIDELBERG, BERLIN, HEIDELBERG, PAGE(S) 238 - 247 , XP019092443 ISBN: 9783540705499 Abschnitte 3.2, 3.3
- DEGNER M ET AL: "Real time exhaust gas sensor with high resolution for onboard sensing of harmful components" SENSORS, 2008 IEEE, IEEE, PISCATAWAY, NJ, USA, 26. Oktober 2008 (2008-10-26), Seiten 973-976, XP031375242 ISBN: 978-1-4244-2580-8
- DEGNER M ET AL: "Low cost sensor for online detection of harmful diesel combustion gases in UV-VIS region" PROCEEDINGS OF THE SPIE - THE INTERNATIONAL SOCIETY FOR OPTICAL ENGINEERING, SPIE, US, Bd. 6198, 1. Januar 2006 (2006-01-01), Seiten 619806-1, XP007912266 ISSN: 0277-786X

## Beschreibung

Die Erfindung bezieht sich auf ein Verfahren zur Bestimmung der Stoffkonzentration in gasförmigen oder fluiden Medien gemäß dem Oberbegriff des Anspruchs 1 und auf eine Vorrichtung zur Bestimmung von Stoffkonzentrationen in gasförmigen oder fluiden Medien gemäß dem Oberbegriff des Anspruchs 2.

Die Vorrichtung dient unter anderem zum Messen von Stickstoffmonoxid (NO), Stickstoffdioxyd (NO₂), Schwefeldioxyd (SO₂), Ozon (O₃), sowie Komponenten in fluiden Medien und dgl., für Verbrennungsmotoren, insbesondere bei der online Überwachung von Dieselmotoren, in der Umweltmesstechnik, in der Medizintechnik bspw. zur Messung der Atemluft u. dgl.

Zum Messen von Stoffkonzentrationen sind spektroskopische Messungen mit Hilfe von Breitbandlichtquellen und spektral selektiven Empfängern, wie z. B. Spektrometern oder gefilterten Fotoempfängern, bekannt. Darüber hinaus ist es üblich, spektral selektive Quellen, wie z.B. Laser oder gefilterte Breitbandlichtquellen, über eine Messstrecke auf gefilterte oder ungefilterte Empfänger zu leiten, um so z. B. Gase und Flüssigkeiten zu charakterisieren. Eine logische Folgerung hieraus ist der Einsatz von ohnehin spektral selektiven LED-Lichtquellen mit und ohne optische Filter. LEDs sind hierbei als Breitbandlichtquellen zu verstehen, da sie im Gegensatz zu Linienlichtquellen (z.B. Laser) ein vergleichsweise breites Frequenzspektrum abstrahlen. Der Einsatz von Lichtführungsoptiken, z. B. Lichtwellenleitern (LWL), zur mechanischen und thermischen Entkopplung bzw. zur räumlichen Trennung von Messort und Sende-/Empfangseinheit ist ebenfalls in der Sensorik bekannt.

Das grundlegende Messprinzip der optischen Spektroskopie basiert auf der Extinktionsmessung von Licht, welches eine Messzelle durchlaufen hat. Der Rückschluss auf eine definierte Stoffmengenkonzentration in der Messzelle ist also nur ein indirektes Verfahren. Messsicherheit kann durch den Einsatz zusätzlicher, so genannter Referenzwellenlängen, erreicht werden, wobei die spektrale Charakteristik des zu messenden Stoffes ausgenutzt wird. Diese Aussagen führen beispielsweise zu einem Messaufbau, der in Figur 5 im Aufsatz von M. Degner und H. Ewald "Low cost sensor for online detection of harmful diesel combustion gases in UV-VIS region" [SPIE Photonics Europe 2006, Photonics in the Automobile II, ISBN 0-8194-6254-3, FR Strasbourg, 04/2006] dargestellt ist. Neben breitbandigen Quellen werden in der Spektroskopie für hohe Auflösungen sehr viel häufiger durchstimmbare Laserquellen eingesetzt. Eine Absorptionsbande des gesuchten Stoffes wird dabei mittels der Laserlinie gescannt. Vereinfacht gesehen ist die Intensität des empfangenen Lichtes außerhalb der Absorptionsbande dabei als Referenz zur Intensität an der Stelle der Absorptionsbande zu sehen, da im Bereich der Absorptionsbande die Lichtintensität geschwächt wird.

Nachteilig hierbei ist, dass sich mit Hilfe der so genannten Laserspektroskopie zwar hohe Konzentrations-Auflösungen erzielen lassen. Die Anzahl der zu detektierenden Stoffe ist jedoch durch das Vorhandensein einer geeigneten Laserquelle bei den entsprechenden Stoffinteraktionswellenlängen eingeschränkt. Zudem sind diese Anordnungen oft sehr teuer, wenig robust und somit nicht für Massenanwendungen in der Sensorik tauglich.

Der Einsatz von Breitbandlichtquellen führt in Kombination mit Spektrometern ebenfalls zu kostenintensiven und zudem nicht sehr sensitiven Messaufbauten. Hierbei wird das gesamte Spektrum der Breitbandlichtquelle mit dem Spektrum nach Durchtritt durch die Messzelle verglichen. Gefilterte Breitbandlichtquellen und speziell die LEDs sind dagegen eine eher kostengünstige Alternative. Das generelle Problem der Anordnungen mit breitbandigen Lichtquellen ist die spektrale und zeitliche Schwankung der Lichtintensität bzw. Abstrahlcharakteristik, wodurch die Auflösung und vor allem die maximal erreichbare Genauigkeit stark eingeschränkt werden. Außerdem sind aufgrund der begrenzten spektralen optischen Leistungsdichte (abgesehen von einigen sehr speziellen LEDs) hohe Messzeiten erforderlich, um so hohe Auflösungen zu erzielen.

Aus "Monitoring of Environmentally Hazardous Exhaust Emissions from Cars Using Optical Fibre Sensors", Elfed Lewis et al., 21. Juli 2008, Embedded Computer Systems: Architecture, Modeling and Simulation; [Lecture Notes in Computer Science], Seiten 238 bis 247, Springer Verlag, ISBN:9783540705499 sind bereits ein Verfahren und eine Vorrichtung der eingangs genannten Art zur Bestimmung der Stoffkonzentration in gasförmigen oder fluiden Medien mittels optischer Absorptionsspektroskopie sowie ein Verfahren und eine Vorrichtung zur Temperaturmessung bekannt. Bei der letzteren ist eine Breitbandlichtquelle durch einen Lichtwellenleiter mit einem FBG-Sensor verbunden, während ein abstimmbarer Fabry-Perot-Filter zur Bestimmung der Verschiebung der Bragg-Wellenlänge mit einem Referenz-FBG-Sensor verbunden ist. Die beiden Lichtwellenleiter sind dort mittels eines 2 x 2 Faserkopplers miteinander gekoppelt.

Der Erfindung liegt von daher die Aufgabe zugrunde, ein kostengünstiges, hoch auflösendes und gleichzeitig schnelles spektroskopisches Verfahren sowie eine Vorrichtung zum Messen von Stoffkonzentrationen in gasförmigen oder fluiden Medien zu schaffen, welches bzw. welche robust gegenüber äußeren Einflüssen ist.

Die Lösung dieser Aufgabe ergibt sich gemäß den kennzeichnenden Merkmalen des Verfahrensanspruchs dadurch, dass die zeitlich und örtlich schwankende Abstrahlcharakteristik der Breitbandlichtquellen durch Modenkoppler in den Lichtwellenleitern homogenisiert und so die Einflüsse der Abstrahlcharakteristik der Breitbandlichtquellen und der Modenwichtung der optischen Komponenten beseitigt werden. Die Lösung der Aufgabe ergibt sich gemäß den kennzeichnenden Merkmalen des Vorrichtungsanspruches durch einen Modenkoppler im Lichtpfad zur Homogenisierung der zeitlichen und örtlich schwankenden Abstrahlcharakteristik der Breitbandlichtquellen.

Diese Modenkoppler sollten dabei so ausgelegt sein, dass sie eine möglichst geringe Dämpfung oder Streuung aufweisen. Dabei werden typischerweise kostengünstige spektral selektive Breitbandlichtquellen benutzt, deren Licht über eine Lichtführung in die Messstrecke eingekoppelt und spektral selektiv ausgewertet wird.

Ein Problem bei den bekannten Strahlteilungen für die Spektroskopie ist, dass die beiden Teilströme nicht mit ausreichender Genauigkeit zueinander stabil gehalten werden können. Dies kommt aufgrund der zeitlich veränderlichen örtlichen Fluktuation der abgestrahlten Intensität des Lichtes zu Stande. Die momentane Aufteilung des Lichtes ist dabei von der momentanen, zeitlich veränderlichen inhomogenen Abstrahlcharakteristik der Breitbandlichtquellen abhängig. Erfindungsgemäß erfolgt die Homogenisierung der Abstrahlcharakteristik durch die Verwendung der Modenkoppler. Die anschließende Aufteilung des Lichtes ist somit nicht mehr von der schwankenden Intensitätsverteilung der Lichtquelle abhängig. Das eingestrahlte Licht "vergisst" quasi, wo es herkommt. Prinzipiell können hierfür Streuplatten (Milchglas, Diffusor) eingesetzt werden, wobei jedoch mit einem erheblichen Intensitätsverlust zu rechnen ist. Erfindungsgemäß wird die Modenkopplung über die Modenkoppler in den Lichtführungsoptiken bzw. Lichtpfaden vorgenommen. Hierfür bieten sich Lichtwellenleiter an, da in diesen Modenkoppler integriert werden können. Hierfür gibt es unterschiedliche Ausführungsmöglichkeiten, wie z. B. Nutzung sehr langer Fasern, Taper, mehrdimensionale Biegekoppler und dgl. Mit den Modenkopplern wird ein effizientes, optisches Bauelement zur Homogenisierung der Abstrahlcharakteristik verwendet.

Erfindungsgemäß werden die verbleibenden zeitlichen Schwankungen der spektral selektiven Breitbandlichtquellen, insbesondere LEDs, mit Hilfe einer geeigneten Referenzanordnung kompensiert, d.h. die durch die Messanordnung und Umgebung bedingten Störgrößen werden gegenüber der Zielgröße kompensiert. Somit ist die Messsignalsicherheit wesentlich größer und speziell dadurch werden höhere Messgenauigkeiten/Auflösungen erreicht.

Durch den Einsatz der Modenkoppler, ausgeführt z.B. als Ringkoppler, und der Faserkoppler zur Teilung des Lichtes wird eine quellenunabhängige, robuste und somit exakte Referenzierung ermöglicht um so z. B. Gaskonzentrationen von unter 1 ppm bei einer Absorptionslänge von wenigen Zentimetern bei einer Messzeit von wenigen Millisekunden zu messen.

Als ein Anwendungsfall der oben beschriebenen Verfahren zur Referenzierung und zur Realisierung kostengünstiger, hochgenauer spektroskopischer Sensoren, wird hier der Abgassensor für Verbrennungsprozesse bzw. -motoren auf der Basis von neuartigen UV-LEDs angeführt. Dieser Sensor ist auch konstruktiv für den Einsatz in extrem rauer Umgebung, wie z. B. dem Abgaskanal eines Pkw geeignet und erprobt (u.a. hohe Temperaturen, Vibrationen, chemisch aggressive Medien).

Die erfindungsgemäße Vorrichtung zum Messen von Stoffkonzentrationen in gasförmigen oder fluiden Medien ist nachfolgend anhand von in den Zeichnungen dargestellter Ausführungsformen näher erläutert. Es zeigt:

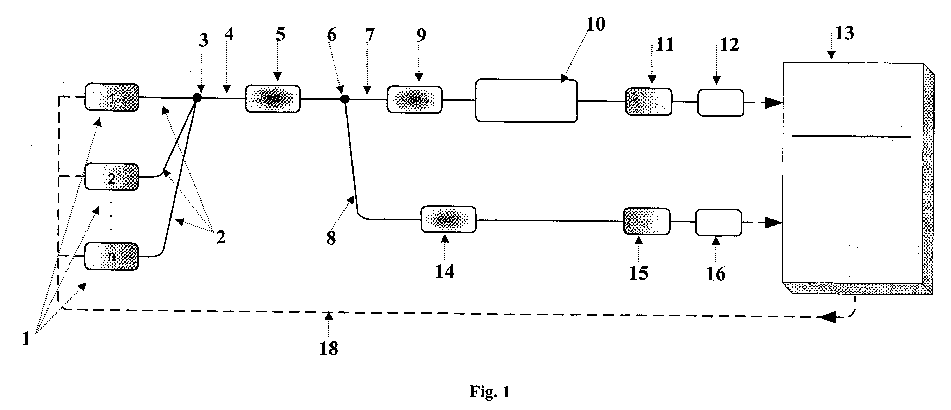

Fig. 1 eine prinzipielle Darstellung der erfindungsgemäßen Ausführungsform,

Die in Fig. 1 dargestellte Ausführungsform einer Vorrichtung zum Messen von Stoffenkonzentrationen in Medien umfasst 1 ... n spektral selektive breitbandige Lichtquellen 1, bspw. LEDs, die über Lichtwellenleiter 2 einem ersten Faserkoppler 3 zugeführt, dort gemischt und auf einen Lichtpfad gekoppelt werden. Ein an den ersten Koppler 3 angeschlossener Lichtwellenleiter 4 ist über einen Modenkoppler 5 einem zweiten Faserkoppler 6 (z. B. 75/25) zugeführt. Von diesem gehen zwei weitere Lichtwellenleiter 7 und 8 ab, von denen der Lichtwellenleiter 7 über einen Modenkoppler 9 zu einer das zu messende Medium enthaltenden Messzelle 10, weiter zu einem ersten Fotoempfänger 11, zu einem A/D-Wandler 12 und dann zu einem Rechner 13, z. B. einem µC oder einem DSP geführt ist. Der weitere Lichtwellenleiter 8 führt das Quellenlicht über einen Modenkoppler 14 zu einem zweiten Fotoempfänger 15, einem A/D-Wandler 16 und dann zu dem o. g. Rechner. Durch geeignete Signalverarbeitung, z.B. Referenzierung durch Vergleich der beiden Empfangskanäle, wird eine faseroptische Referenzierung ermöglicht. Somit ist eine sehr genaue Konzentrationsmessung der in der Messstrecke der Messzelle 10 befindlichen Stoffe realisierbar. Die elektronische Ansteuerung der spektral selektiven Lichtquellen erfolgt über den o. g. Rechner via Ansteuerleitung 18, was günstig für synchrone Ansteuerung und Signalaufnahme bzgl. hoher Messraten ist.

Erfindungsgemäß erfolgt die Homogenisierung der Abstrahlcharakteristik der 1 ... n spektral selektiven Lichtquellen 1 durch die Verwendung der Modenkoppler 5, 9, 14. Die anschließende Aufteilung des Lichtes ist somit nicht mehr von der schwankenden Intensitätsverteilung der Lichtquellen 1 abhängig. Das eingestrahlte Licht "vergisst" quasi, wo es herkommt. Dabei wird die Modenkopplung hier über die Modenkoppler 5, 9, 14 in den optischen Lichtwellenleitern 2, 4, 7, 8 eingesetzt. Hierfür gibt es unterschiedliche Ausführungsmöglichkeiten, wie z. B. Nutzung sehr langer Fasern, Taper, mehrdimensionale Biegekoppler und dgl. Mit den Modenkopplern 5, 9, 14 wird ein effizientes optisches Bauelement zur Homogenisierung der Abstrahlcharakteristik verwendet.

Die Schwankungen der gefilterten spektral selektiven breitbandigen Lichtquellen 1 ... n, insbesondere LEDs, werden mit Hilfe der Referenzanordnung, bestehend aus dem Lichtpfad des Lichtwellenleiters 8, mit Modenkoppler 14 und dem zweiten Fotoempfänger 15 sowie dem zugehörigen A/D-Wandler 16 mit entsprechender Signalverarbeitung, im Rechner 13 kompensiert. Die durch die Messanordnung und Umgebung bedingten Störgrößen werden somit gegenüber der Zielgröße unterdrückt. Die Messsignalsicherheit ist daher wesentlich größer und speziell dadurch werden höhere Messgenauigkeiten/Auflösungen erreicht. Durch den Einsatz der Modenkoppler 5, 9, 14, ausgeführt z.B. als Ringkoppler, und der Faserkoppler 3, 6 zur Teilung des Lichtes wird eine quellenunabhängige, robuste und somit exakte Referenzierung ermöglicht, um so z. B. Gaskonzentrationen von unter 1 ppm bei einer Absorptionslänge von wenigen Zentimetern bei einer Messzeit von wenigen Millisekunden zu messen.

Als ein Anwendungsfall der oben abgehandelten Verfahren zur Referenzierung und zur Realisierung kostengünstiger, hochgenauer spektroskopischer Sensoren, wird hier der Abgassensor für Verbrennungsprozesse bzw. -motoren auf der Basis von neuartigen UV-LEDs angeführt. Dieser Sensor ist auch konstruktiv für den Einsatz in extrem rauer Umgebung, wie z. B. dem Abgaskanal eines Pkw geeignet und erprobt (u.a. hohe Temperaturen, Vibrationen, chemisch aggressive Medien).

### Bezugszeichenliste

- 01: Lichtquelle
- 02: Lichtwellenleiter
- 03: Faserkoppler
- 04: Lichtwellenleiter
- 05: Modenkoppler
- 06: Faserkoppler
- 07: Lichtwellenleiter
- 08: Lichtwellenleiter
- 09: Modenkoppier
- 10: Messzelle
- 11: Fotoempfänger
- 12: Analog-/Digitalwandler (A/D-Wandler)
- 13: Rechner
- 14: Modenkoppler
- 15: Fotoempfänger
- 16: A/D-Wandler
- 18: Quellenansteuerleitung

## Patentansprüche

1. Verfahren zur Bestimmung der Stoffkonzentration in gasförmigen oder fluiden Medien mittels optischer Absorptionsspektroskopie unter Referenzierung, mit 1 bis n spektral selektiven Breitbandlichtquellen (1), insbesondere LEDs, wobei das Licht der Breitbandlichtquellen (1) durch erste Lichtwellenleiter (2) in einen gemeinsamen zweiten Lichtwellenleiter (4) gekoppelt und dann aufgeteilt wird, wonach das Licht teilweise durch einen dritten Lichtwellenleiter (7) und durch eine Messstrecke einer Messzelle (10) mit einem gasförmigen oder fluiden Medium zu einem Messdetektor (11) und teilweise durch einen vierten Lichtwellenleiter (8) zu einem Referenzdetektor (15) geleitet wird, **dadurch gekennzeichnet, dass** die zeitlich und örtlich schwankende Abstrahlcharakteristik der Breitbandlichtquellen (1) durch Modenkoppler (5, 9, 14) in den zweiten, dritten und vierten Lichtwellenleitern (4, 7, 8) homogenisiert wird.

2. Vorrichtung zur Bestimmung von Stoffkonzentrationen in gasförmigen oder fluiden Medien mittels optischer Absorptionsspektroskopie gemäß dem Verfahren nach Anspruch 1, mit 1 bis n spektral selektiven Breitbandlichtquellen (1), insbesondere LEDs, die durch erste Lichtwellenleiter (2) mit einem ersten Lichtwellenleiter- oder Faserkoppler (3) verbunden sind, einem an den Lichtwellenleiter- oder Faserkoppler (3) angeschlossenen gemeinsamen zweiten Lichtwellenleiter (4), einem an den zweiten Lichtwellenleiter (4) angeschlossenen zweiten Lichtwellenleiter- oder Faserkoppler (6), der durch einen dritten Lichtwellenleiter (7) sowie durch eine Messtrecke einer Messzelle (10) mit einem Messdetektor (11) und durch einen vierten Lichtwellenleiter (8) mit einem Referenzdetektor (15) verbunden ist, **gekennzeichnet durch** Modenkoppler (5, 9, 14) in den zweiten, dritten und vierten Lichtwellenleitern (4, 7, 8) zur Homogenisierung der zeitlichen und örtlich schwankenden Abstrahlcharakteristik der Breitbandlichtquellen (1).

## Claims

1. A method for determining the concentration of a substance in gaseous or fluid media by optical absorption spectroscopy using referencing, with 1 to n spectrally selective broad band light sources (1), in particular LEDs, wherein the light of the broad band light sources (1) is coupled by a first optical wave guide (2) into a second joint optical wave guide (4) and is then separated, wherein the light is partially guided through a third optical wave guide (7) and through the measurement path of a measurement cell (10) with a gaseous or fluid media to a measurement detector (11) and partially through a fourth optical wave guide (8) to a reference detector (15), **characterized in that** the temporally and spatially varying emission characteristics of the broad band light sources (1) are homogenized via a mode coupler (5, 9, 14) to the second, third and fourth optical wave guide (4, 7, 8).

2. Device for determining substance concentrations in gaseous or fluid media using absorption spectroscopy according to the method of claim 1 with 1 to n spectrally selective broad band light sources (1), in particular LEDs, which are connected via first optical wave guides (2) to a first optical wave guide coupler or optical fibre coupler (3), a joint second optical wave guide (4) connected to the optical wave guide coupler or optical fibre coupler (3), a second optical wave guide coupler or optical fibre coupler (6) connected to the second optical wave guide (4), which is connected to a reference detector (15) via a third optical wave guide (7) as well as via a measurement path of a measurement cell (10) having a measurement detector (11) and via a fourth optical wave guide (8), **characterized in that** it has mode couplers (5, 9, 14) in the second, third and fourth optical wave guides (4, 7, 8) for homogenizing the temporally and spatially varying emission characteristics of the broad band light sources (1).

## Revendications

1. Procédé servant à déterminer la concentration d'une substance dans des milieux gazeux ou fluides au moyen d'une spectroscopie optique d'absorption par référencement, comprenant 1 à n sources de lumière à large bande (1) à sélectivité spectrale, en particulier des DEL, la lumière des sources de lumière à large bande (1) étant couplée par des premiers guides d'ondes de lumière (2) dans un deuxième guide d'ondes de lumière (4) commun puis étant fractionnée, la lumière étant par la suite acheminée en partie par un troisième guide d'ondes de lumière (7) et à travers un tronçon de mesure d'une cellule de mesure (10) comprenant un milieu gazeux ou fluide à un détecteur de mesure (11) et en partie par un quatrième guide d'ondes de lumière (8) à un détecteur de référence (15), **caractérisé en ce que** la caractéristique de rayonnement, variant dans le temps et dans l'espace, des sources de lumière à large bande (1) est homogénéisée par des coupleurs de mode (5, 9, 14) dans les deuxième, troisième et quatrième guides d'ondes de lumière (4, 7, 8).

2. Dispositif servant à déterminer des concentrations d'une substance dans des milieux gazeux ou fluides au moyen d'une spectroscopie optique d'absorption selon le procédé selon la revendication 1, comprenant 1 à n sources de lumière à large bande (1) à sélectivité spectrale, en particulier des DEL, qui sont reliées par des premiers guides d'ondes de lumière (2) à un premier coupleur de guides d'ondes de lumière ou de fibres (3), comprenant un deuxième guide d'ondes de lumière (4) commun raccordé au coupleur de guides d'ondes de lumière ou de fibres (3), comprenant un deuxième coupleur de guides d'ondes de lumière ou de fibres (6) raccordé au deuxième guide d'ondes de lumière (4), lequel est relié par un troisième guide d'ondes de lumière (7) ainsi que par un tronçon de mesure d'une cellule de mesure (10) à un détecteur de mesure (11), et, par un quatrième guide d'ondes de lumière (8), à un détecteur de référence (15), **caractérisé par** des coupleurs de mode (5, 9, 14), dans les deuxième, troisième et quatrième guides d'ondes de lumière (4, 7, 8), aux fins de l'homogénéisation de la caractéristique de rayonnement variant dans le temps et dans l'espace des sources de lumière à large bande (1).
